# EUROPEAN PATENT APPLICATION

(11) **EP 4 738 509 A1**
(43) Date of publication of application: **06.05.2026**
(21) Application number: 25203623.1
(22) Date of filing: 22.09.2025
(51) Int. Cl.: H01M 10/0562, H01M 10/0525

(54) **ALL-SOLID-STATE BATTERY AND APPLICATION THEREOF**

(30) Priority: 31.10.2024 CN 202411545111
(71) Applicant: AESC Japan Ltd., Yokohama-shi, Kanagawa 220-0012 (JP)
(72) Inventor: YU, Le, Pudong New Area Shanghai, Shanghai 201315 (CN); WU, Ming, Pudong New Area Shanghai, Shanghai 201315 (CN)
(74) Representative: Becker, Eberhard

(57) **Abstract**

An all-solid-state battery (10) and an application thereof are provided. The all-solid-state battery (10) includes at least: a first solid electrolyte layer (131) disposed on a side of a positive electrode (11) of the all-solid-state battery (10), with an ionic conductivity of 1×10⁻⁴~1×10⁻²S/cm; a second solid electrolyte layer (132) disposed on a side of a negative electrode (12) of the all-solid-state battery (10), with an ionic conductivity of 1×10⁻³~2×10⁻²S/cm; and a third solid electrolyte layer (133) disposed between the first solid electrolyte layer (131) and the second solid electrolyte layer (132), with an ionic conductivity of 1×10⁻³~2×10⁻²S/cm. The disclosure may improve resistance of a solid electrolyte membrane to lithium dendrite penetration in the all-solid-state battery, improve the ionic conductivity, electrochemical reduction stability, and compatibility between the solid electrolyte membrane and the positive and negative electrodes, thereby improving cycle life and safety of a battery.

## Description

### BACKGROUND

### Technical Field

The disclosure relates to a technical field of a battery, and more particularly, to an all-solid-state battery and an application thereof.

### Description of Related Art

With rapid development of industries such as new energy vehicles and wearable devices, a demand for a lithium-ion battery with high energy density, long cycle life, and high safety is increasing. An all-solid-state battery has attracted widespread attention due to advantages thereof such as excellent ion conductivity, mechanical strength, and thermal stability. However, in an actual application of the all-solid-state battery, a solid electrolyte membrane may not meet characteristics such as high ionic conductivity, resistance to lithium dendrite penetration, high voltage resistance, and reduction resistance at the same time, thereby seriously restricting the development and application of the all-solid-state battery.

### SUMMARY

The disclosure provides an all-solid-state battery and an application thereof. Through the all-solid-state battery and the application thereof provided in the disclosure, the resistance of the solid electrolyte membrane to lithium dendrite penetration in the all-solid-state battery may be improved, and an ionic conductivity, electrochemical reduction stability, and compatibility between the solid electrolyte membrane and the positive and negative electrodes may be improved, thereby improving cycle life and safety of a battery.

In order to solve the above technical issues, the disclosure provides an all-solid-state battery, including at least:
a first solid electrolyte layer disposed on a side of a positive electrode of the all-solid-state battery, in which an ionic conductivity of the first solid electrolyte layer is 1×10⁻⁴S/cm~1×10⁻²S/cm;
a second solid electrolyte layer disposed on a side of a negative electrode of the all-solid-state battery, in which an ionic conductivity of the second solid electrolyte layer is 1×10⁻³S/cm~2×10⁻²S/cm; and
a third solid electrolyte layer disposed between the first solid electrolyte layer and the second solid electrolyte layer, in which an ionic conductivity of the third solid electrolyte layer is 1×10⁻³S/cm~2×10⁻²S/cm.

In an embodiment of the disclosure, the first solid electrolyte layer includes a first electrolyte, and a chemical formula of the first electrolyte is Li₂₊ₙZf₁₋ₙMₙCl_{6-x-y}BrₓI_{y}, where 0≤n≤0.6, 0≤x≤6, 0≤y≤6, x+y≤6, and M is selected from at least one of V, Cr, Mn, Fe, Co, or Ni.

In an embodiment of the disclosure, M is Fe, and a value range of n is 0.01≤n≤0.5.

In an embodiment of the disclosure, the second solid electrolyte layer includes a second electrolyte, and a chemical formula of the second electrolyte is LiₐP_{1-b}T_{b}S_{c}O_{d}Xₑ, where 5<a<6, 0<b<1, 1.5<c<5, 0<d<2.5, 4<c+d<5, 1<e<2, T is selected from at least one of Al, Ga, In, Ti, Sc, As, Sb, Bi, V, or Nb, and X is selected from at least one of Cl, Br, or I.

In an embodiment of the disclosure, T is selected from at least one of Sb, In, or Bi, X is Cl, and a value range of b is 0<b≤0.1.

In an embodiment of the disclosure, the second solid electrolyte layer includes a second electrolyte, and a chemical formula of the second electrolyte is Li_{f}P_{1-g}E_{g}S_{w}O_{g}Q_{z}, where 5<f<10, 0<g<1, 3<w<6, 4<w+g<6, 0<z<2, E is selected from at least one of Mg, Ca, Sr, Ba, Zn, Cr, Sn, or Pb, and Q is selected from at least one of Cl, Br, or I.

In an embodiment of the disclosure, E is Mg, Q is Cl, and a value range of g is 0.01≤g≤0.1.

In an embodiment of the disclosure, the third solid electrolyte layer includes the second electrolyte and a third electrolyte, and a chemical formula of the third electrolyte is Li₁₀Ge₁₋ᵢGᵢP₂S₁₂, where, 0≤i < 1, and G is selected from at least one of Si or Sn.

In an embodiment of the disclosure, in the third solid electrolyte layer, a content of the second electrolyte is 1 wt% to 95 wt%, and a content of the third electrolyte is 5 wt% to 99 wt%.

In an embodiment of the disclosure, a thickness of the first solid electrolyte layer is 1 µm to 100 µm, a thickness of the second solid electrolyte layer is 1 µm to 150 µm, and a thickness of the third solid electrolyte layer is 1 µm to 100 µm.

The disclosure further provides an electronic device, including the all-solid-state battery.

Based on the above, the disclosure provides the all-solid-state battery and the application thereof. By improving the solid electrolyte membrane in the all-solid-state battery, the compatibility between the solid electrolyte membrane and the positive and negative electrodes may be improved, and an electrochemical window of the solid electrolyte membrane may be widened, thereby improving stability of the all-solid-state battery. It may improve the resistance of the solid electrolyte membrane to lithium dendrite penetration, avoid the short circuit of the battery, and ensure that the all-solid-state battery may still operate stably and safely at the high rate, thereby improving the safety and cycle life of the battery. It may improve the ionic conductivity of the solid electrolyte membrane, thereby improving the working efficiency of the battery. It may improve the electrochemical reduction stability of the solid electrolyte membrane, so that the solid electrolyte membrane may effectively resist issues such as reduction reaction and electrode interface instability.

### BRIEF DESCRIPTION OF THE DRAWINGS

In order to more clearly describe technical solutions of the embodiments of the disclosure, the accompanying drawings required for use in descriptions of the embodiments will be briefly introduced below. Obviously, the accompanying drawings in the following descriptions are merely some embodiments of the disclosure. For those skilled in the art, other drawings may be obtained based on the accompanying drawings without creative efforts.
FIG. 1 is a structural diagram of an all-solid-state battery in an embodiment of the disclosure.
FIG. 2 is a schematic diagram of a process for preparing a first solid electrolyte layer and a second solid electrolyte layer in an embodiment of the disclosure.
FIG. 3 is a scanning electron microscope image of a solid electrolyte membrane in an embodiment of the disclosure.
FIG. 4 is a graph of results of a room temperature cycle performance test on an all-solid-state battery in Example 3 of the disclosure.

Descriptions of reference numerals:
10. all-solid-state battery; 11. positive electrode; 12. negative electrode; 13. solid electrolyte membrane; 131. first solid electrolyte layer; 132. second solid electrolyte layer; 133. third solid electrolyte layer.

### DETAILED DESCRIPTION OF DISCLOSED EMBODIMENTS

The following describes the implementation of the disclosure through specific examples. Those skilled in the art may easily understand other advantages and effects of the disclosure from the contents disclosed in the specification. The disclosure may further be implemented or applied through other different specific implementations, and the details in the specification may also be modified or changed in various ways based on different viewpoints and applications without departing from the spirit of the disclosure.

It should be understood that the disclosure may be implemented in different forms and should not be construed as limited to the embodiments set forth herein. On the contrary, the embodiments are provided, so that the disclosure will be thorough and complete, and will fully convey the scope of the disclosure to those skilled in the art.

The technical solutions of the disclosure are further described in detail below in conjunction with the embodiments. Obviously, the described embodiments are only some embodiments of the disclosure, not all the embodiments. Based on the embodiments of the disclosure, all other embodiments obtained by those skilled in the art without making any creative efforts shall fall within the scope of protection of the disclosure.

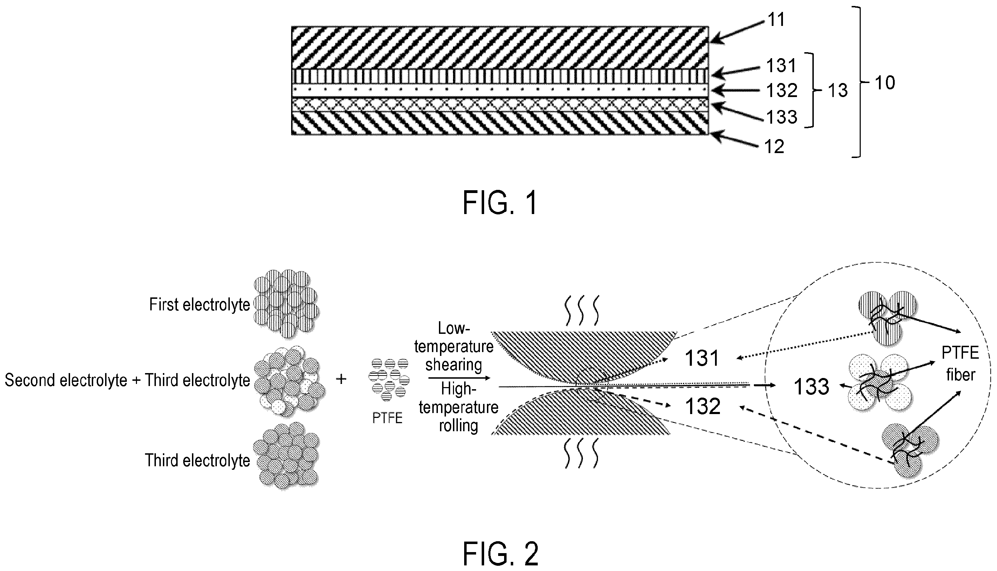

Referring to FIG. 1, the disclosure provides an all-solid-state battery 10, which includes, for example, a positive electrode 11, a negative electrode 12, a solid electrolyte membrane 13, etc. The solid electrolyte membrane 13 is disposed between the positive electrode 11 and the negative electrode 12, and the solid electrolyte membrane 13 includes, for example, a first solid electrolyte layer 131, a second solid electrolyte layer 132, and a third solid electrolyte layer 133. The first solid electrolyte layer 131 is disposed on a side of the positive electrode 11. The second solid electrolyte layer 132 is disposed on a side of the negative electrode 12. The third solid electrolyte layer 133 is disposed between the first solid electrolyte layer 131 and the second solid electrolyte layer 132. In the all-solid-state battery 10 provided in the disclosure, for the solid electrolyte membrane 13, resistance to lithium dendrite penetration, electrochemical reduction stability, and compatibility with the positive and negative electrodes may all be improved. In the disclosure, the all-solid-state battery 10 is, for example, a primary battery or a secondary battery, and the secondary battery is, for example, a pouch battery, a prismatic battery, a cylindrical battery, etc. The disclosure provides no specific limitation to a type and form of the all-solid-state battery 10.

Referring to FIG. 1, in an embodiment of the disclosure, the positive electrode 11 includes, for example, a positive electrode active material, a solid electrolyte, a conductive agent, and a binder. The positive electrode active material is, for example, selected from at least one of lithium nickel cobalt manganese oxide (NCM), lithium nickel oxide (LNO), lithium manganese oxide (LMO), lithium nickel manganese oxide (LNMO), lithium cobalt oxide (LCO), lithium nickel cobalt aluminum oxide (NCA), etc. The solid electrolyte is, for example, a halide electrolyte that does not produce an exothermic reaction with the positive electrode active material to improve safety of a battery. The conductive agent is, for example, at least one selected from conductive carbon black (Super P), vapor-grown carbon fiber (VGCF), acetylene black, carbon nanotubes, graphene, etc. The binder is, for example, at least one selected from polytetrafluoroethylene (PTFE), polyvinylidene fluoride, polyethylene oxide, polyamide, polyacrylonitrile, polyacrylate, polyvinyl ether, polymethyl methacrylate, ethylene-propylene-diene terpolymer, polyhexafluoropropylene, styrene-butadiene rubber. The disclosure provides no limitation to mass ratios of the positive electrode active material, the solid electrolyte, the conductive agent, and the binder, which may be selected according to actual requirements.

Referring to FIG. 1, in an embodiment of the disclosure, the positive electrode active material is, for example, LiNi_{0.8}Co_{0.1}Mn_{0.1}O₂, a chemical formula of the halide electrolyte is, for example, Li_{2.35}Zr_{0.65}Fe_{0.35}Cl₅Br_{0.5}I_{0.5}. The conductive agent includes, for example, Super P and VGCF, and a mass ratio of Super P to VGCF is 1:1. The binder is, for example, PTFE. After the positive electrode active material, the halide solid electrolyte, the conductive agent, and the binder are mixed uniformly, for example, at a mass ratio of 69:29:1:1, the positive electrode 11 is obtained by dry pressing.

Referring to FIG. 1, in an embodiment of the disclosure, the negative electrode 12 is, for example, metallic lithium.

Referring to FIG. 1, in an embodiment of the disclosure, the solid electrolyte membrane 13 has a thickness of 5 µm to 200 µm, for example, and ionic conductivity of 1×10⁻⁴S/cm to 2×10⁻²S/cm, for example. Specifically, in the solid electrolyte membrane 13, the first solid electrolyte layer 131 has a thickness of 1 µm to 100 µm, for example, and ionic conductivity of 1×10⁻⁴ S/cm to 1×10⁻² S/cm, for example, the second solid electrolyte layer 132 has a thickness of 1 µm to 150 µm, for example, and ionic conductivity of 1×10⁻³S/cm to 2×10⁻²S/cm, for example, and the third solid electrolyte layer 133 has a thickness of 1 µm to 100 µm, for example, and ionic conductivity of 1×10⁻³S/cm to 2×10⁻²S/cm, for example. By forming the three solid electrolyte layers as the solid electrolyte membrane 13, the ionic conductivity of the solid electrolyte membrane 13 may be improved, thereby improving working efficiency of the all-solid-state battery 10. Moreover, by controlling the thicknesses of the solid electrolyte membrane 13, the first solid electrolyte layer 131, and the second solid electrolyte layer 132, cycle performance of the all-solid-state battery 10 may be improved, thereby extending service life of the battery.

Referring to FIG. 1, in an embodiment of the disclosure, the first solid electrolyte layer 131 includes a first electrolyte. The first electrolyte is, for example, a high-voltage-resistant halide electrolyte, which may widen an electrochemical window of the solid electrolyte membrane 13, so that the solid electrolyte membrane 13 may be adapted to a high-voltage positive electrode, improving the compatibility between the solid electrolyte membrane 13 and the positive electrode 11. Specifically, a chemical formula of the first electrolyte is, for example, Li₂₊ₙZr₁₋ₙMₙCl_{6-x-y}BrₓI_{y}, where 0≤n≤0.6, 0≤x≤6, 0≤y≤6, and x+y≤6, and M is selected from at least one of V, Cr, Mn, Fe, Co, Ni, etc. Furthermore, M is, for example, Fe, and a value range of n is 0.01≤n≤0.5. Specifically, n is, for example, 0.35. By controlling a type of the M element and the value range of n in the first electrolyte, chemical stability and lithium-ion conductivity of the first solid electrolyte layer 131 may be improved.

Referring to FIGs. 1 and 2, in an embodiment of the disclosure, when the first solid electrolyte layer 131 is prepared, firstly, in an atmosphere of an inert gas such as argon, according to the chemical formula of the first electrolyte of Li₂₊ₙZr₁₋ₙMₙCl_{6-x-y}BrₓI_{y}, a Li source, a Zr source, an M source, a Cl source, a Br source, and an I source are mixed uniformly according to a stoichiometric amount, and then, for example, placed in a ball mill jar for ball milling to obtain the first electrolyte. The Li source is, for example, selected from at least one of LiCl, LiBr, LiI, etc. The Zr source is, for example, ZrCl₄. The M source is, for example, chloride of M. The Cl source is, for example, from at least one of the Li source, the Zr source, or the M source. The Br source and the I source are, for example, from the Li source. A mass ratio of a ball material is, for example, (1-100):1. A time for ball milling is, for example, 1h to 72h. A rotation speed is, for example, 100rpm to 1500rpm. After the first electrolyte is obtained, the first solid electrolyte layer 131 is prepared by, for example, a powder extrusion method, a wet coating method, or an electrostatic spraying method.

Referring to FIG. 2, in an embodiment of the disclosure, when the first solid electrolyte layer 131 is prepared by the powder extrusion method, firstly, the first electrolyte and a first binder are mixed uniformly, for example, by low-temperature shearing to be rapidly heated for high-temperature shearing and mixing to obtain a mixed material. Then, the mixed material is added to a rolling machine for high-temperature rolling to obtain the first solid electrolyte layer 131. The first binder is, for example, selected from at least one of PTFE, ethylene tetrafluoroethylene (ETFE), fluorinated ethylene propylene (FEP), polyfluoroalkoxy (PFA), polychlorotrifluoroethylene (PCTFE), ethylene-chlorotrifluoroethylene copolymer (ECTFE), polyvinylidene fluoride (PVDF), polyvinylidene fluoride-hexafluoropropylene copolymer, polyvinylidene fluoride-chlorotrifluoroethylene copolymer, etc. A content of the first electrolyte in the mixed material is, for example, 95 wt% to 99.9 wt%. A content of the first binder in the mixed material is, for example, 0.1 wt% to 5 wt%. A temperature of low-temperature shearing is, for example, -30°C to 15°C. A temperature of high-temperature shearing is, for example, 20° C to 200°C. A temperature of high-temperature rolling is, for example, 20°C to 200°C.

Referring to FIG. 1, in another embodiment of the disclosure, when the first solid electrolyte layer 131 is prepared by the wet coating method or the electrostatic spraying method, firstly, the first electrolyte, a second binder, and a solvent are mixed uniformly to obtain a mixed component, and then the mixed component is coated on a substrate by the wet coating method or the electrostatic spraying method. Then, the substrate coated with the mixed component is dried at a high temperature and peeled off to obtain the first solid electrolyte layer 131. The second binder is selected from at least one of PVDF, carboxymethyl cellulose (CMC), polymerized styrene butadiene rubber (SBR), polyvinyl pyrrolidone (PVP), polymethyl methacrylate (PMMA), polyacrylonitrile (PAN), polyacrylic acid (PAA), polyurethane, polyvinyl alcohol (PVA), sodium alginate (Alg), an ethylene-propylene-diene monomer, styrene butadiene rubber, polyvinylidene fluoride, fluoroelastomer, β-cyclodextrin (β-CDp), polypropylene emulsion (LA132), PTFE, ETFE, FEP, PFA, PCTFE, ECTFE, polyvinylidene fluoride-hexafluoropropylene copolymer, polyvinylidene fluoride-chlorotrifluoroethylene copolymer, etc. The solvent is selected from at least one of toluene, chlorobenzene, xylene, dimethyl carbonate, N-methylformamide, n-hexane, ethylene glycol dimethyl ether, dibutyl ether, ethanol, 1,2-ethylenediamine, 1,2-ethanedithiol, acetonitrile, tetrahydrofuran, methanol, diisopropyl ether, acetone, hexene, ethyl acetate, benzyl acetate, butyl butyrate, diisobutyl ketone, etc. The content of the first electrolyte in the mixed component is 30 wt% to 90 wt%. A content of the second binder in the mixed components is, for example, 0.1 wt% to 10 wt%. A content of the solvent in the mixed components is, for example, 10 wt% to 50 wt%. The substrate is, for example, selected from a polyethylene glycol terephthalate (PET) film, smooth aluminum foil, release paper, etc. A temperature of high-temperature drying is, for example, 30°C to 250°C.

Referring to FIG. 1, in an embodiment of the disclosure, the second solid electrolyte layer 132 includes a second electrolyte. The second electrolyte is, for example, a reduction-resistant sulfide electrolyte, which may improve the electrochemical reduction stability of the solid electrolyte membrane 13. Specifically, a chemical formula of the second electrolyte is, for example, at least one selected from LiₐP_{1-b}T_{b}S_{c}O_{d}Xₑ, Li_{f}P_{1-g}E_{g}S_{w}O_{g}Q_{z}, etc., where in LiₐP_{1-b}T_{b}S_{c}O_{d}Xₑ, 5<a<6, 0<b<1, 1.5<c<5, 0<d<2.5, 4<c+d<5, and 1<e<2, T is selected from at least one of Al, Ga, In, Ti, Sc, As, Sb, Bi, As, V, Nb, etc., and X is selected from at least one of Cl, Br, I, etc. Furthermore, T is selected from at least one of Sb, In, or Bi, X is Cl, and a value range of b is, for example, 0<b≤0.1. More specifically, when T is a +5-valent element, b is, for example, 0.04, and when T is a +3-valent element, b is, for example, 0.02. By controlling types of the T and X elements in the second electrolyte and the value range of b, the cycle performance of the all-solid-state battery 10 may be improved, thereby extending the service life of the battery.

Referring to FIG. 1, in an embodiment of the disclosure, when the chemical formula of the second electrolyte is Li_{f}P_{1-g}E_{g}S_{w}O_{g}Q_{z}, where 5<f<10, 0<g<1, 3<w<6, 4<w+g<6, and 0<z<2, E is, for example, at least one selected from Mg, Ca, Sr, Ba, Zn, Cr, Sn, Pb, etc., and Q is, for example, at least one selected from Cl, Br, I, etc. Furthermore, E is, for example, Mg, Q is, for example, Cl, and a value range of g is, for example, 0.01≤g≤0.1. Specifically, g is, for example, 0.02. By controlling a type of the E element, a type of the Q element, and the value range of g in the second electrolyte, the cycle performance of the all-solid-state battery 10 may be improved, thereby extending the service life of the battery.

Referring to FIG. 1, in an embodiment of the disclosure, when the first solid electrolyte layer 131 is prepared, firstly, in the atmosphere of the inert gas such as the argon, according to the chemical formula of the second electrolyte of LiₐP_{1-b}TₑS_{c}O_{d}Xₑ or Li_{f}P_{1-g}E_{g}S_{w}O_{g}Q_{z}, the Li source, a P source, a T source, a S source, and an X source, or the Li source, the P source, an E source, a S source, and a Q source are mixed uniformly according to the stoichiometric amount, and then, for example, placed in the ball mill jar for ball milling to obtain precursor powder. Then, the precursor powder is annealed and sintered at a high temperature to obtain the second electrolyte. The Li source is, for example, selected from at least one of Li₂S, LiCl, LiBr, LiI, etc. The P source is, for example, P₂S₅. The T source is, for example, oxide of T. The S source is, for example, from at least one of the Li source, the P source, etc. The X source is, for example, from the Li source. The E source is, for example, oxide of E. The Q source is, for example, from the Li source. The mass ratio of the ball material is, for example, (1-100):1. The time for ball milling is, for example, 1h to 48h. The rotation speed is, for example, 50rpm to 1500rpm. the sintering temperature is, for example, 400°C to 600°C, and a sintering time is, for example, 1h to 48h. After the second electrolyte is obtained, the second solid electrolyte layer 132 is prepared by, for example, the powder extrusion method, the wet coating method, or the electrostatic spraying method. A process of preparing the second solid electrolyte layer 132 by the powder extrusion method, the wet coating method, or the electrostatic spraying method is the same as a process of preparing the first solid electrolyte layer 131 by the powder extrusion method, the wet coating method, or the electrostatic spraying method, which will not be further elaborated here.

Referring to FIG. 1, in an embodiment of the disclosure, the third solid electrolyte layer 133 includes a second electrolyte and a third electrolyte. The second electrolyte is the same as the second electrolyte in the second solid electrolyte layer 132, which will not be further elaborated here. The third electrolyte is, for example, a lithium reduction reaction type sulfide electrolyte, which may consume generated lithium dendrite, prevent the lithium dendrite penetration, avoid short circuit of the all-solid-state battery 10, and ensure that the all-solid-state battery 10 may still operate stably and safely at a high rate. Specifically, in the third solid electrolyte layer 133, a content of the second electrolyte is, for example, 1 wt% to 95 wt%, and a content of the third electrolyte is, for example, 5 wt% to 99 wt%. A chemical formula of the third electrolyte is, for example, Li₁₀Ge₁₋ᵢGᵢP₂S₁₂, where 0≤i < 1, and G is selected from at least one of Si, Sn, etc. Specifically, in this embodiment, i is 0, for example. By controlling a value of i, the cycle performance of the all-solid-state battery 10 may be improved, thereby extending the service life of the battery.

Referring to FIGs. 1 and 2, in an embodiment of the disclosure, when the third solid electrolyte layer 133 is prepared, firstly, in the atmosphere of the inert gas such the argon, according to the chemical formula of the third electrolyte of Li₁₀Ge₁₋ᵢGᵢP₂S₁₂, the Li source, a Ge source, a G source, the P source, and the S source are mixed uniformly according to the stoichiometric amount, and then, for example, placed in the ball mill jar for ball milling to obtain precursor powder of the third electrolyte, and then the precursor powder of the third electrolyte is annealed and sintered at a high temperature to obtain the third electrolyte. The Li source is, for example, Li₂S. The Ge source is, for example, GeS₂. The G source is, for example, sulfide of G. The P source is, for example, P₂S₅. The S source is, for example, from at least one of the Li source, the Ge source, the G source, the P source, etc. The mass ratio of the ball material is, for example, (1-100):1. The time for ball milling is, for example, 1h to 48h. The rotation speed is, for example, 50rpm to 1000rpm. The sintering temperature is, for example, 500°C to 800°C. The sintering time is, for example, 1h to 48h. Next, the second electrolyte is prepared according to the chemical formula of the second electrolyte. A process of preparing the second electrolyte is the same as a process of preparing the second electrolyte in the second solid electrolyte layer 132, which will not be further elaborated herein. After the second electrolyte and the third electrolyte are obtained, the second electrolyte and the third electrolyte are mixed uniformly to obtain a mixed electrolyte material, and then the third solid electrolyte layer 133 is prepared by, for example, the powder extrusion method, the wet coating method, or the electrostatic spraying method. A process of preparing the third solid electrolyte layer 133 by the powder extrusion method, the wet coating method, or the electrostatic spraying method is the same as the process of preparing the first solid electrolyte layer 131 by the powder extrusion method, the wet coating method, or the electrostatic spraying method, which will not be further elaborated here.

Referring to FIG. 1, in an embodiment of the disclosure, when the solid electrolyte membrane 13 is prepared, the first solid electrolyte layer 131, the third solid electrolyte layer 133, and the second solid electrolyte layer 132 are sequentially rolled to form the solid electrolyte membrane 13. The first solid electrolyte layer 131 may widen the electrochemical window of the solid electrolyte membrane 13, so that the solid electrolyte membrane 13 may be adapted to the high-voltage positive electrode 11 and the lithium metal negative electrode 12, the second solid electrolyte layer 132 may improve the electrochemical reduction stability of the solid electrolyte membrane 13 and improve interface stability between the solid electrolyte membrane 13 and the negative electrode 12 to ensure a continuous and stable lithium-ion transmission channel, and the third solid electrolyte layer 133 may consume the generated lithium dendrite, prevent the lithium dendrite penetration, avoid the short circuit of the all-solid-state battery 10, and ensure that the all-solid-state battery 10 may still operate stably and safely at the high rate.

Referring to FIG. 1, in an embodiment of the disclosure, the positive electrode 11, the solid electrolyte membrane 13, and the negative electrode 12 are sequentially laminated, packaged, hot-pressed, and cold pressed to be assembled into the all-solid-state battery 10.

Hereinafter, the disclosure will be explained more specifically by using examples, and the examples should not be construed as being limitative. Appropriate modifications may be made within a scope consistent with a subject of the disclosure, all of which fall within the technical scope of the disclosure.

### Example 1

Preparation of the first electrolyte: In an argon atmosphere, 1.35 mol of LiCl, 0.5 mol of LiBr, 0.5 mol of LiI, 0.65 mol of ZrCl₄, and 0.35 mol of FeCl₃ were subjected to high-energy ball milling to obtain an electrolyte material of Li_{2.35}Zr_{0.65}Fe_{0.35}Cl₅Br_{0.5}I_{0.5}.

Preparation of the second electrolyte: In the argon atmosphere, 2 mol of Li₂S, 1.5 mol of LiCl, 0.48 mol of P₂S₅, and 0.02 mol of Sb₂O₅ were subjected to the high-energy ball milling to obtain a precursor powder of Li_{5.5}P_{0.96}Sb_{0.04}S_{4.40}O_{0.10}Cl_{1.5}, and then the precursor powder was sintered at a temperature of 500°C for 10h and cooled to obtain an electrolyte material of Li_{5.5}P_{0.96}Sb_{0.04}S_{4.40}O_{0.10}Cl_{1.5}.

Preparation of the third electrolyte: In the argon atmosphere, 5 mol of Li₂S, 1 mol of P₂S₅, and 1 mol of GeS₂ were subjected to the high-energy ball milling to obtain a precursor powder of Li₁₀GeP₂S₁₂, and then the precursor powder was sintered at a temperature of 600°C for 10h and cooled to obtain an electrolyte material of Li₁₀GeP₂S₁₂.

Preparation of the first solid electrolyte layer: The electrolyte material of Li_{2.35}Zr_{0.65}Fe_{0.35}Cl₅Br_{0.5}I_{0.5} and PTFE were mixed uniformly at a mass ratio of 99:1 at -20°C, and the temperature was raised up to 80°C to fiberize PTFE to obtain a mixed material of Li_{2.35}Zr_{0.65}Fe_{0.35}Cl₅Br_{0.5}I_{0.5} and PTFE for preparing the first solid electrolyte layer. Then, the mixed material of Li_{2.35}Zr_{0.65}Fe_{0.35}Cl₅Br_{0.5}I_{0.5} and PTFE was extruded into the rolling machine. At 80°C, by adjusting a gap of the rolling machine, an electrolyte membrane was rolled to a thickness of 5 µm to form the first solid electrolyte layer.

Preparation of the second solid electrolyte layer: The electrolyte material of Li_{5.5}P_{0.96}Sb_{0.04}S_{4.40}O_{0.10}Cl_{1.5} and PTFE were mixed uniformly at the mass ratio of 99:1 at -20°C, and the temperature was raised up to 80°C to fiberize PTFE to obtain a mixed material of Li_{5.5}P_{0.96}Sb_{0.04}S_{4.40}O_{0.10}Cl_{1.5} and PTFE for preparing the second solid electrolyte layer. Then, the mixed material of Li_{5.5}P_{0.96}Sb_{0.04}S_{4.40}O_{0.10}Cl_{1.5} and PTFE was extruded into the rolling machine. At 80°C, by adjusting the gap of the rolling machine, the electrolyte membrane was rolled to a thickness of 20 µm to form the second solid electrolyte layer.

Preparation of the third solid electrolyte layer: 5 wt % of the electrolyte material of Li₁₀GeP₂S₁₂ and 95 wt % of the electrolyte material of Li_{5.5}P_{0.96}Sb_{0.04}S_{4.40}O_{0.10}Cl_{1.5} were mixed uniformly to obtain a mixed electrolyte material. Next, the mixed electrolyte material and PTFE were mixed uniformly at the mass ratio of 99:1 at -20°C, and the temperature was raised up to 80°C to fiberize PTFE to obtain a mixed material for preparing the third solid electrolyte layer. Then, the mixed material was extruded into the rolling machine. At 80°C, by adjusting the gap of the rolling machine, the electrolyte membrane was rolled to the thickness of 5 µm to form the third solid electrolyte layer.

Preparation of the solid electrolyte membrane: The first solid electrolyte layer, the third solid electrolyte layer, and the second solid electrolyte layer were sequentially rolled in the rolling machine to form the solid electrolyte membrane.

Preparation of the positive electrode: After a positive electrode active material of LiNi_{0.8}Co_{0.1}Mn_{0.1}O₂, a halide solid electrolyte of Li_{2.35}Zr_{0.65}Fe_{0.35}Cl₅Br_{0.5}I_{0.5}, the conductive agent, and PTFE were mixed uniformly, for example, at a mass ratio of 69:29:1:1, the positive electrode was obtained by dry pressing. The conductive agent included Super P and VGCF, and the mass ratio of Super P to VGCF was 1:1.

Choice of the negative electrode: The metallic lithium was chosen as the negative electrode.

Preparation of the battery: The positive electrode, the solid electrolyte membrane, and the negative electrode were sequentially laminated, packaged, hot-pressed, and cold-pressed to be assembled into an all-solid-state pouch battery.

### Example 2

A difference between this example and Example 1 was that in the third solid electrolyte layer, the content of the second electrolyte was 50 wt %, and the content of the third electrolyte was 50 wt %.

### Example 3

A difference between this example and Example 1 was that in the third solid electrolyte layer, the content of the second electrolyte was 20 wt %, and the content of the third electrolyte was 80 wt %.

### Example 4

A difference between this example and Example 1 was that in the third solid electrolyte layer, the content of the second electrolyte was 1 wt %, and the content of the third electrolyte was 99 wt %.

### Example 5

A difference between this example and Example 3 was that the chemical formula of the third electrolyte was Li₁₀Ge_{0.5}Sn_{0.5}P₂S₁₂, and raw materials were 1 mol of Li₂S, 1 mol of P₂S₅, 0.5 mol of GeS₂, and 0.5 mol of SnS₂.

### Example 6

A difference between this example and Example 3 was that the chemical formula of the third electrolyte was Li₁₀Ge_{0.5}Si_{0.5}P₂S₁₂, and the raw materials were 1 mol of Li₂S, 1 mol of P₂S₅, 0.5 mol of GeS₂, and 0.5 mol of SiS₂.

### Example 7

A difference between this example and Example 3 was that the thickness of the first solid electrolyte layer was adjusted to 1 µm by adjusting a roll gap of the rolling machine.

### Example 8

A difference between this example and Example 3 was that the thickness of the first solid electrolyte layer was adjusted to 50 µm by adjusting the roll gap of the rolling machine.

### Example 9

A difference between this example and Example 3 was that the thickness of the first solid electrolyte layer was adjusted to 100 µm by adjusting the roll gap of the rolling machine.

### Example 10

A difference between this example and Example 3 was that the thickness of the third solid electrolyte layer was adjusted to 1 µm by adjusting the roll gap of the rolling machine.

### Example 11

A difference between this example and Example 3 was that the thickness of the third solid electrolyte layer was adjusted to 50 µm by adjusting the roll gap of the rolling machine.

### Example 12

A difference between this example and Example 3 was that the thickness of the third solid electrolyte layer was adjusted to 100 µm by adjusting the roll gap of the rolling machine.

### Example 13

A difference between this example and Example 3 was that the thickness of the second solid electrolyte layer was adjusted to 1 µm by adjusting the roll gap of the rolling machine.

### Example 14

A difference between this example and Example 3 was that the thickness of the second solid electrolyte layer was adjusted to 50 µm by adjusting the roll gap of the rolling machine.

### Example 15

A difference between this example and Example 3 was that the thickness of the second solid electrolyte layer was adjusted to 150 µm by adjusting the roll gap of the rolling machine.

### Example 16

A difference between this example and Example 3 was that the chemical formula of the first electrolyte was Li_{2.2}Zr_{0.8}Fe_{0.2}Cl₅Br_{0.5}I_{0.5}, and raw materials were 1.2 mol of LiCl, 0.5 mol of LiBr, 0.5 mol of LiI, 0.8 mol of ZrCl₄, and 0.2 mol of FeCl₃.

### Example 17

A difference between this example and Example 3 was that the chemical formula of the first electrolyte was Li_{2.6}Zr_{0.4}Fe_{0.6}Cl₅Br_{0.5}I_{0.5}, and the raw materials were 1.6 mol of LiCl, 0.5 mol of LiBr, 0.5 mol of LiI, 0.4 mol of ZrCl₄, and 0.6 mol of FeCl₃.

### Example 18

A difference between this example and Example 3 was that the chemical formula of the second electrolyte was Li_{5.5}P_{0.99}Sb_{0.01}S_{4.475}O_{0.025}Cl_{1.5}, and raw materials were 2 mol of Li₂S, 1.5 mol of LiCl, 0.495 mol of P₂S₅, and 0.05 mol of Sb₂O₅.

### Example 19

A difference between this example and Example 3 was that the chemical formula of the second electrolyte was Li_{5.5}P_{0.9}Sb_{0.1}S_{4.25}O_{0.25}Cl_{1.5}, and the raw materials were 2 mol of Li₂S, 1.5 mol of LiCl, 0.45 mol of P₂S₅, and 0.05 mol of Sb₂O₅.

### Example 20

A difference between this example and Example 3 was that the chemical formula of the second electrolyte was Li_{5.5}P_{0.96}Sb_{0.04}S_{4.40}O_{0.10}Cl_{1.3}Br_{0.1}I_{0.1}, and the raw materials were 2 mol of Li₂S, 1.3 mol of LiCl, 0.1 mol of LiBr, 0.1 mol of LiI, 0.48 mol of P₂S₅, and 0.02 mol of Sb₂O₅.

### Example 21

A difference between this example and Example 3 was that the chemical formula of the second electrolyte was Li_{5.52}P_{0.99}Bi_{0.01}S_{4.485}O_{0.015}Cl_{1.5}, and the raw materials were 2.01 mol of Li₂S, 1.5 mol of LiCl, 0.495 mol of P₂S₅, and 0.005 mol of Bi₂O₃.

### Example 22

A difference between this example and Example 3 was that the chemical formula of the second electrolyte was Li_{5.54}P_{0.98}Bi_{0.02}S_{4.47}O_{0.03}Cl_{1.5}, and the raw materials were 2.02 mol of Li₂S, 1.5 mol of LiCl, 0.49 mol of P₂S₅, and 0.01 mol of Bi₂O₃.

### Example 23

A difference between this example and Example 3 was that the chemical formula of the second electrolyte was Li_{5.7}P_{0.9}Bi_{0.1}S_{4.35}O_{0.15}Cl_{1.5}, and the raw materials were 2.1 mol of Li₂S, 1.5 mol of LiCl, 0.45 mol of P₂S₅, and 0.05 mol of Bi₂O₃.

### Example 24

A difference between this example and Example 3 was that the chemical formula of the second electrolyte was Li_{5.54}P_{0.98}Bi_{0.02}S_{4.47}O_{0.03}Cl_{1.3}Br_{0.1}I_{0.1}, and the raw materials were 2.02 mol of Li₂S, 1.3 mol of LiCl, 0.1 mol of LiBr, 0.1 mol of LiI, 0.49 mol of P₂S₅, and 0.01 mol of Bi₂O₃.

### Example 25

A difference between this example and Example 3 was that the chemical formula of the second electrolyte was Li_{5.52}P_{0.99}In_{0.01}S_{4.485}O_{0.015}Cl_{1.5}, and the raw materials were 2.01 mol of Li₂S, 1.5 mol of LiCl, 0.495 mol of P₂S₅, and 0.005 mol of In₂O₃.

### Example 26

A difference between this example and Example 3 was that the chemical formula of the second electrolyte was Li_{5.54}P_{0.98}In_{0.02}S_{4.47}O_{0.03}Cl_{1.5}, and the raw materials were 2.02 mol of Li₂S, 1.5 mol of LiCl, 0.49 mol of P₂S₅, and 0.01 mol of In₂O₃.

### Example 27

A difference between this example and Example 3 was that the chemical formula of the second electrolyte was Li_{5.7}P_{0.9}In_{0.1}S_{4.35}O_{0.15}Cl_{1.5}, and the raw materials were 2.1 mol of Li₂S, 1.5 mol of LiCl, 0.45 mol of P₂S₅, and 0.05 mol of In₂O₃.

### Example 28

A difference between this example and Example 3 was that the chemical formula of the second electrolyte was Li_{5.54}P_{0.98}In_{0.02}S_{4.47}O_{0.03}Cl_{1.3}Br_{0.1}I_{0.1}, and the raw materials were 2.02 mol of Li₂S, 1.3 mol of LiCl, 0.1 mol of LiBr, 0.1 mol of LiI, 0.49 mol of P₂S₅, and 0.01 mol of In₂O₃.

### Example 29

A difference between this example and Example 3 was that the chemical formula of the second electrolyte was Li_{5.53}P_{0.99}Mg_{0.01}S_{4.49}O_{0.01}Cl_{1.5}, and the raw materials were 2.015 mol of Li₂S, 1.5 mol of LiCl, 0.495 mol of P₂S₅, and 0.01 mol of MgO.

### Example 30

A difference between this example and Example 3 was that the chemical formula of the second electrolyte was Li_{5.56}P_{0.98}Mg_{0.02}S_{4.48}O_{0.02}Cl_{1.5}, and the raw materials were 2.03 mol of Li₂S, 1.5 mol of LiCl, 0.49 mol of P₂S₅, and 0.02 mol of MgO.

### Example 31

A difference between this example and Example 3 was that the chemical formula of the second electrolyte was Li_{5.8}P_{0.9}Mg_{0.1}S_{4.48}O_{0.1}Cl_{1.5}, and the raw materials were 2.15 mol of Li₂S, 1.5 mol of LiCl, 0.45 mol of P₂S₅, and 0.1 mol of MgO.

### Example 32

A difference between this example and Example 3 was that the chemical formula of the second electrolyte was Li_{5.56}P_{0.98}Mg_{0.02}S_{4.48}O_{0.02}Cl_{1.3}Br_{0.1}I_{0.1}, and the raw materials were 2.03 mol of Li₂S, 1.3 mol of LiCl, 0.1 mol of LiBr, 0.1 mol of LiI, 0.49 mol of P₂S₅, and 0.02 mol of MgO.

### Example 33

A difference between this example and Example 3 was that in the processes of preparing the first solid electrolyte layer, the second solid electrolyte layer, and the third solid electrolyte layer, ETFE was selected as the first binder.

### Example 34

A difference between this example and Example 3 was that in the processes of preparing the first solid electrolyte layer, the second solid electrolyte layer, and the third solid electrolyte layer, PCTFE was selected as the first binder.

### Example 35

A difference between this example and Example 3 was that the first solid electrolyte layer, the second solid electrolyte layer, and the third solid electrolyte layer were prepared by the wet coating method.

Specifically, in this embodiment, the preparation of the first solid electrolyte layer: The electrolyte material of Li_{2.35}Zr_{0.65}Fe_{0.35}Cl₅Br_{0.5}I_{0.5}, a SBR binder, and a xylene solvent were mixed uniformly in a mass ratio of 49:1:50 to form an electrolyte slurry. The electrolyte slurry was scraped onto the smooth aluminum foil by using a film applicator of 5 µm, and vacuum-dried at 80 °C to form a first solid electrolyte layer of Li_{2.35}Zr_{0.65}Fe_{0.35}Cl₅Br_{0.5}I_{0.5} with the thickness of 5 µm.

The preparation of the second solid electrolyte layer: The electrolyte material of Li_{5.5}P_{0.96}Sb_{0.04}S_{4.40}O_{0.10}Cl_{1.5}, the SBR binder, and the xylene solvent were mixed uniformly in the mass ratio of 49:1:50 to prepare the electrolyte slurry. The electrolyte slurry was scraped onto the smooth aluminum foil by using a film applicator of 20 µm, and vacuum-dried at 80°C to form a second solid electrolyte layer of Li_{5.5}P_{0.96}Sb_{0.04}S_{4.40}O_{0.10}Cl_{1.5} with the thickness of 20 µm.

The preparation of the third solid electrolyte layer: 80 wt % of the electrolyte material of Li₁₀GeP₂S₁₂ and 20 wt % of the electrolyte material of Li_{5.5}P_{0.96}Sb_{0.04}S_{4.40}O_{0.10}Cl_{1.5} were mixed uniformly to obtain the mixed electrolyte material. Next, the mixed electrolyte material, the SBR binder, and the xylene solvent were mixed uniformly in the mass ratio of 49:1:50 to prepare the electrolyte slurry, and the electrolyte slurry was scraped onto the smooth aluminum foil by using the film applicator of 5 µm and vacuum-dried at 80°C to prepare a third solid electrolyte layer with the thickness of 5 µm.

### Example 36

A difference between this example and Example 35 was that in the processes of preparing the first solid electrolyte layer, the second solid electrolyte layer, and the third solid electrolyte layer, PVDF was selected as the second binder.

### Example 37

A difference between this example and Example 35 was that in the processes of preparing the first solid electrolyte layer, the second solid electrolyte layer, and the third solid electrolyte layer, PAA was selected as the second binder.

### Comparative Example 1

A difference between this example and Example 3 was that the chemical formula of the second electrolyte was Li_{5.5}PS_{4.5}Cl_{1.5}, and the raw materials were 2 mol of Li₂S, 1.5 mol of LiCl, and 0.5 mol of P₂S₅.

### Comparative Example 2

A difference between this example and Example 3 was that the solid electrolyte membrane only included the first solid electrolyte layer.

### Comparative Example 3

A difference between this example and Example 3 was that the solid electrolyte membrane only included the second solid electrolyte layer.

### Comparative Example 4

A difference between this example and Example 3 was that the solid electrolyte membrane only included the third solid electrolyte layer.

Compositions and parameters of the first solid electrolyte layer, the second solid electrolyte layer, and the third solid electrolyte layer in each of the example and the comparative examples were shown in Table 1.

**Table 1: a composition table of the first solid electrolyte layer, the second solid electrolyte layer, and the third solid electrolyte layer in Examples 1 to 37 and Comparative Examples 1 to 4**

| Group | First solid electrolyte layer | | | Second solid electrolyte layer | | | Third solid electrolyte layer | | |
|---|---|---|---|---|---|---|---|---|---|
| | Chemical formula | Ionic condu ctivit y/S*c m⁻¹ | Thick ness/ µm | Chemical formula | Ionic condu ctivit y/S*c m⁻¹ | Thick ness/ µm | Chemical formula | Ionic condu ctivit y/S*c m⁻¹ | Thick ness /µm |
| Example 1 | Li_{2.35}Zr_{0.65} Fe_{0.35}Cl₅Br _{0.5}I_{0.5} | 1.35× 10⁻³ | 5 | Li_{5.5}P_{0.96}Sb _{0.04}S_{4.40}O_{0.1 0}Cl_{1.5} | 6.35× 10⁻³ | 20 | 5wt%Li₁₀GeP₂S₁₂+ 95wt%Li_{5.5}P_{0.96}Sb_{0.0 4}S_{4.40}O_{0.10}Cl_{1.5} | 8.83× 10⁻³ | 5 |
| Example 2 | Li_{2.35}Zr_{0.65} Fe_{0.35}Cl₅Br _{0.5}I_{0.5} | 1.35× 10⁻³ | 5 | Li_{5.5}P_{0.96}Sb _{0.04}S_{4.40}O_{0.1 0}Cl_{1.5} | 6.35× 10⁻³ | 20 | 50wt%Li₁₀GeP₂S₁₂ +50wt%Li_{5.5}P_{0.96}Sb _{0.04}S_{4.40}O_{0.10}Cl_{1.5} | 9.92× 10⁻³ | 5 |
| Example 3 | Li_{2.35}Zr_{0.65} Fe_{0.35}Cl₅Br _{0.5}I_{0.5} | 1.35× 10⁻³ | 5 | Li_{5.5}P_{0.96}Sb _{0.04}S_{4.40}O_{0.1 0}Cl_{1.5} | 6.35× 10⁻³ | 20 | 80wt%Li₁₀GeP₂S₁₂ +20wt%Li_{5.5}P_{0.96}Sb _{0.04}S_{4.40}O_{0.10}Cl_{1.5} | 10.88 ×10⁻³ | 5 |
| Example 4 | Li_{2.35}Zr_{0.65} Fe_{0.35}Cl₅Br _{0.5}I_{0.5} | 1.35× 10⁻³ | 5 | Li_{5.5}P_{0.96}Sb _{0.04}S_{4.40}O_{0.1 0}Cl_{1.5} | 6.35× 10⁻³ | 20 | 99wt%Li₁₀GeP₂S₁₂ +1wt%Li_{5.5}P_{0.96} Sb_{0. 04}S_{4.40}O_{0.10}Cl_{1.5} | 11.35 ×10⁻³ | 5 |
| Example 5 | Li_{2.35}Zr_{0.65} Fe_{0.35}Cl₅Br _{0.5}I_{0.5} | 1.35× 10⁻³ | 5 | Li_{5.5}P_{0.96}Sb _{0.04}S_{4.40}O_{0.1 0}Cl_{1.5} | 6.35× 10⁻³ | 20 | 80wt%Li₁₀Ge_{0.5}Sn_{0. 5}P₂S₁₂+20wt%Li_{5.5}P _{0.96}Sb_{0.04}S_{4.40}O_{0.10}Cl 1.5 | 9.93× 10⁻³ | 5 |
| Example 6 | Li_{2.35}Zr_{0.65} Fe_{0.35}Cl₅Br _{0.5}I_{0.5} | 1.35× 10⁻³ | 5 | Li_{5.5}P_{0.96}Sb _{0.04}S_{4.40}O_{0.1 0}Cl_{1.5} | 6.35× 10⁻³ | 20 | 80wt%Li₁₀Ge_{0.5}Si_{0.5} P₂S₁₂+20wt%Li_{5.5}P_{0 .96}Sb_{0.04}S_{4.40}O_{0.10}Cl_{1. 5} | 11.52 ×10⁻³ | 5 |
| Example 7 | Li_{2.35}Zr_{0.65} Fe_{0.35}Cl₅Br _{0.5}I_{0.5} | 1.35× 10⁻³ | 1 | Li_{5.5}P_{0.96}Sb _{0.04}S_{4.40}O_{0.1 0}Cl_{1.5} | 6.35× 10⁻³ | 20 | 80wt%Li₁₀GeP₂S₁₂ +20wt%Li_{5.5}P_{0.96}Sb _{0.04}S_{4.40}O_{0.10}Cl_{1.5} | 10.88 ×10⁻³ | 5 |
| Example 8 | Li_{2.35}Zr_{0.65} Fe_{0.35}Cl₅Br _{0.5}I_{0.5} | 1.35× 10⁻³ | 50 | Li_{5.5}P_{0.96}Sb _{0.04}S_{4.40}O_{0.1 0}Cl_{1.5} | 6.35× 10⁻³ | 20 | 80wt%Li₁₀GeP₂S₁₂ +20wt%Li_{5.5}P_{0.96}Sb _{0.04}S_{4.40}O_{0.10}Cl_{1.5} | 10.88 ×10⁻³ | 5 |
| Example 9 | Li_{2.35}Zr_{0.65} Fe_{0.35}Cl₅Br _{0.5}I_{0.5} | 1.35× 10⁻³ | 100 | Li_{5.5}P_{0.96}Sb _{0.04}S_{4.40}O_{0.1 0}Cl_{1.5} | 6.35× 10⁻³ | 20 | 80wt%Li₁₀GeP₂S₁₂ +20wt%Li_{5.5}P_{0.96}Sb _{0.04}S_{4.40}O_{0.10}Cl_{1.5} | 10.88 ×10⁻³ | 5 |
| Example 10 | Li_{2.35}Zr_{0.65} Fe_{0.35}Cl₅Br _{0.5}I_{0.5} | 1.35× 10⁻³ | 5 | Li_{5.5}P_{0.96}Sb _{0.04}S_{4.40}O_{0.1 0}Cl_{1.5} | 6.35× 10⁻³ | 20 | 80wt%Li₁₀GeP₂S₁₂ +20wt%Li_{5.5}P_{0.96}Sb _{0.04}S_{4.40}O_{0.10}Cl_{1.5} | 10.88 ×10⁻³ | 1 |
| Example 11 | Li_{2.35}Zr_{0.65} Fe_{0.35}Cl₅Br _{0.5}I_{0.5} | 1.35× 10⁻³ | 5 | Li_{5.5}P_{0.96}Sb _{0.04}S_{4.40}O_{0.1 0}Cl_{1.5} | 6.35× 10⁻³ | 20 | 80wt%Li₁₀GeP₂S₁₂ +20wt%Li_{5.5}P_{0.96}Sb _{0.04}S_{4.40}O_{0.10}Cl_{1.5} | 10.88 ×10⁻³ | 50 |
| Example 12 | Li_{2.35}Zr_{0.65} Fe_{0.35}Cl₅Br _{0.5}I_{0.5} | 1.35× 10⁻³ | 5 | Li_{5.5}P_{0.96}Sb _{0.04}S_{4.40}O_{0.1 0}Cl_{1.5} | 6.35× 10⁻³ | 20 | 80wt%Li₁₀GeP₂S₁₂ +20wt%Li_{5.5}P_{0.96}Sb _{0.04}S_{4.40}O_{0.10}Cl_{1.5} | 10.88 ×10⁻³ | 100 |
| Example 13 | Li_{2.35}Zr_{0.65} Fe_{0.35}Cl₅Br _{0.5}I_{0.5} | 1.35× 10⁻³ | 5 | Li_{5.5}P_{0.96}Sb _{0.04}S_{4.40}O_{0.1 0}Cl_{1.5} | 6.35× 10⁻³ | 1 | 80wt%Li₁₀GeP₂S₁₂ +20wt%Li_{5.5}P_{0.96}Sb _{0.04}S_{4.40}O_{0.10}Cl_{1.5} | 10.88 ×10⁻³ | 5 |
| Example 14 | Li_{2.35}Zr_{0.65} Fe_{0.35}Cl₅Br _{0.5}I_{0.5} | 1.35× 10⁻³ | 5 | Li_{5.5}P_{0.96}Sb _{0.04}S_{4.40}O_{0.1 0}Cl_{1.5} | 6.35× 10⁻³ | 50 | 80wt%Li₁₀GeP₂S₁₂ +20wt%Li_{5.5}P_{0.96}Sb _{0.04}S_{4.40}O_{0.10}Cl_{1.5} | 10.88 ×10⁻³ | 5 |
| Example 15 | Li_{2.35}Zr_{0.65} Fe_{0.35}Cl₅Br _{0.5}I_{0.5} | 1.35× 10⁻³ | 5 | Li_{5.5}P_{0.96}Sb _{0.04}S_{4.40}O_{0.1 0}Cl_{1.5} | 6.35× 10⁻³ | 150 | 80wt%Li₁₀GeP₂S₁₂ +20wt%Li_{5.5}P_{0.96}Sb _{0.04}S_{4.40}O_{0.10}Cl_{1.5} | 10.88 ×10⁻³ | 5 |
| Example 16 | Li_{2.2}Zr_{0.8}Fe _{0.2}Cl₅Br_{0.5}I_{0 .5} | 8.32× 10⁻⁴ | 5 | Li_{5.5}P_{0.96}Sb _{0.04}S_{4.40}O_{0.1 0}Cl_{1.5} | 6.35× 10⁻³ | 20 | 80wt%Li₁₀GeP₂S₁₂ +20wt%Li_{5.5}P_{0.96}Sb _{0.04}S_{4.40}O_{0.10}Cl_{1.5} | 10.88 ×10⁻³ | 5 |
| Example 17 | Li_{2.6}Zr_{0.4}Fe _{0.6}Cl₅Br_{0.5}I_{0 .5} | 3.24× 10⁻⁴ | 5 | Li_{5.5}P_{0.96}Sb _{0.04}S_{4.40}O_{0.1 0}Cl_{1.5} | 6.35× 10⁻³ | 20 | 80wt%Li₁₀GeP₂S₁₂ +20wt%Li_{5.5}P_{0.96}Sb _{0.04}S_{4.40}O_{0.10}Cl_{1.5} | 10.88 ×10⁻³ | 5 |
| Example 18 | Li_{2.35}Zr_{0.65} Fe_{0.35}Cl₅Br _{0.5}I_{0.5} | 1.35× 10⁻³ | 5 | Li_{5.5}P_{0.99}Sb _{0.01}S_{4.475}O_{0. 025}Cl_{1.5} | 7.82× 10⁻³ | 20 | 80wt%Li₁₀GeP₂S₁₂ +20wt%Li_{5.5}P_{0.99}Sb _{0.01}S_{4.475}O_{0.025}Cl₁ | 11.16 ×10⁻³ | 5 |
| Example 19 | Li_{2.35}Zr_{0.65} Fe_{0.35}Cl₅Br _{0.5}I_{0.5} | 1.35× 10⁻³ | 5 | Li_{5.5}P_{0.9}Sb_{0. 1}S_{4.25}O_{0.25}C l_{1.5} | 3.33× 10⁻³ | 20 | 80wt%Li₁₀GeP₂S₁₂ +20wt%Li_{5.5}P_{0.9}Sb_{0. 1}S_{4.25}O_{0.25}Cl_{1.5} | 10.26 ×10⁻³ | 5 |
| Example 20 | Li_{2.35}Zr_{0.65} Fe_{0.35}Cl₅Br _{0.5}I_{0.5} | 1.35× 10⁻³ | 5 | Li_{5.5}P_{0.96}Sb _{0.04}S_{4.40}O_{0.1 0}Cl_{1.3}Br_{0.1}I₀ 1 | 5.45× 10⁻³ | 20 | 80wt%Li₁₀GeP₂S₁₂ +20wt%Li_{5.5}P_{0.96}Sb _{0.04}S_{4.40}O_{0.10}Cl_{1.3}Br_{0. 1}I_{0.1} | 10.69 ×10⁻³ | 5 |
| Example 21 | Li_{2.35}Zr_{0.65} Fe_{0.35}Cl₅Br _{0.5}I_{0.5} | 1.35× 10⁻³ | 5 | Li_{5.52}P_{0.99}B i_{0.01}S_{4.485}O_{0 .015}Cl_{1.5} | 8.13× 10⁻³ | 20 | 80wt%Li₁₀GeP₂S₁₂ +20wt%Li_{5.52}P_{0.99}Bi _{0.01}S_{4.485}O_{0.015}Cl_{1.5} | 11.22 ×10⁻³ | 5 |
| Example 22 | Li_{2.35}Zr_{0.65} Fe_{0.35}Cl₅Br _{0.5}I_{0.5} | 1.35× 10⁻³ | 5 | Li_{5.54}P_{0.98}B i_{0.02}S_{4.47}O_{0. 03}Cl_{1.5} | 7.45× 10⁻³ | 20 | 80wt%Li₁₀GeP₂S₁₂ +20wt%Li_{5.54}P_{0.98}Bi _{0.02}S_{4.47}O_{0.03}Cl_{1.5} | 11.09 ×10⁻³ | 5 |
| Example 23 | Li_{2.35}Zr_{0.65} Fe_{0.35}Cl₅Br _{0.5}I_{0.5} | 1.35× 10⁻³ | 5 | Li_{5.7}P_{0.9}Bi_{0.1}S_{4.35}O_{0.15}C l_{1.5} | 3.49× 10⁻³ | 20 | 80wt%Li₁₀GeP₂S₁₂ +20wt%Li_{5.7}P_{0.9}Bi_{0. 1}S_{4.35}O_{0.15}Cl_{1.5} | 10.29 ×10⁻³ | 5 |
| Example 24 | Li_{2.35}Zr_{0.65} Fe_{0.35}Cl₅Br _{0.5}I_{0.5} | 1.35× 10⁻³ | 5 | Li_{5.54}P_{0.98}B i_{0.02}S_{4.47}O_{0. 03}Cl_{1.3}Br_{0.1}I _{0.1} | 6.91× 10⁻³ | 20 | 80wt%Li₁₀GeP₂S₁₂ +20wt%Li_{5.54}P_{0.98}Bi _{0.02}S_{4.47}O_{0.03}Cl_{1.3}Br_{0. 1}I_{0.1} | 10.98 ×10⁻³ | 5 |
| Example 25 | Li_{2.35}Zr_{0.65} Fe_{0.35}Cl₅Br _{0.5}I_{0.5} | 1.35× 10⁻³ | 5 | Li_{5.52}P_{0.99}In _{0.01} S_{4.485}O_{0. 015}Cl_{1.5} | 7.83× 10⁻³ | 20 | 80wt%Li₁₀GeP₂S₁₂ +20wt%Li_{5.52}P_{0.99}In _{0.01}S_{4.485}O_{0.015}Cl_{1.5} | 11.16 ×10⁻³ | 5 |
| Example 26 | Li_{2.35}Zr_{0.65} Fe_{0.35}Cl₅Br _{0.5}I_{0.5} | 1.35× 10⁻³ | 5 | Li_{5.54}P_{0.98}In _{0.02}S_{4.47}O_{0.0 3}Cl_{1.5} | 7.15× 10⁻³ | 20 | 80wt%Li₁₀GeP₂S₁₂ +20wt%Li_{5.54}P_{0.98}In _{0.02}S_{4.47}O_{0.03}Cl_{1.5} | 11.03 ×10⁻³ | 5 |
| Example 27 | Li_{2.35}Zr_{0.65} Fe_{0.35}Cl₅Br _{0.5}I_{0.5} | 1.35× 10⁻³ | 5 | Li_{5.7}P_{0.9}In_{0. 1}S_{4.35}O_{0.15}C l_{1.5} | 1.97× 10⁻³ | 20 | 80wt%Li₁₀GeP₂S₁₂ +20wt%Li_{5.7}P_{0.9}In_{0.1} S_{4.35}O_{0.15}Cl_{1.5} | 9.99× 10⁻³ | 5 |
| Example 28 | Li_{2.35}Zr_{0.65} Fe_{0.35}Cl₅Br _{0.5}I_{0.5} | 1.35× 10⁻³ | 5 | Li_{5.54}P_{0.98}In _{0.02}S_{4.47}O_{0.0 3}Cl_{1.3}Br_{0.1}I_{0 .1} | 6.28× 10⁻³ | 20 | 80wt%Li₁₀GeP₂S₁₂ +20wt%Li_{5.54}P_{0.98}In _{0.02}S_{4.47}O_{0.03}Cl_{1.3}Br_{0. 1}I_{0.1} | 10.85 ×10⁻³ | 5 |
| Example 29 | Li_{2.35}Zr_{0.65} Fe_{0.35}Cl₅Br _{0.5}I_{0.5} | 1.35× 10⁻³ | 5 | Li_{5.53}P_{0.99}M g_{0.01}S_{4.49}O_{0. 01}Cl_{1.5} | 7.53× 10⁻³ | 20 | 80wt%Li₁₀GeP₂S₁₂ +20wt%Li_{5.53}P_{0.99}M g_{0.01}S_{4.49}O_{0.01}Cl_{1.5} | 11.11 ×10⁻³ | 5 |
| Example 30 | Li_{2.35}Zr_{0.65} Fe_{0.35}Cl₅Br _{0.5}I_{0.5} | 1.35× 10⁻³ | 5 | Li_{5.56}P_{0.98}M g_{0.02}S_{4.48}O_{0. 02}Cl_{1.5} | 7.26× 10⁻³ | 20 | 80wt%Li₁₀GeP₂S₁₂ +20wt%Li_{5.56}P_{0.98}M g_{0.02}S_{4.48}O_{0.02}Cl_{1.5} | 11.06 ×10⁻³ | 5 |
| Example 31 | Li_{2.35}Zr_{0.65} Fe_{0.35}Cl₅Br _{0.5}I_{0.5} | 1.35× 10⁻³ | 5 | Li_{5.8}P_{0.9}Mg _{0.1}S_{4.48}O_{0.1} Cl_{1.5} | 1.86× 10⁻³ | 20 | 80wt%Li₁₀GeP₂S₁₂ +20wt%Li_{5.8}P_{0.9}Mg _{0.1}S_{4.48}O_{0.1}Cl_{1.5} | 9.97× 10⁻³ | 5 |
| Example 32 | Li_{2.35}Zr_{0.65} Fe_{0.35}Cl₅Br _{0.5}I_{0.5} | 1.35× 10⁻³ | 5 | Li_{5.56}P_{0.98}M g_{0.02}S_{4.48}O_{0. 02}Cl_{1.3}Br_{0.1}I _{0.1} | 5.67× 10⁻³ | 20 | 80wt%Li₁₀GeP₂S₁₂ +20wt%Li_{5.56}P_{0.98}M g_{0.02}S_{4.48}O_{0.02}Cl_{1.3}Br _{0.1}I_{0.1} | 10.73 ×10⁻³ | 5 |
| Example 33 | Li_{2.35}Zr_{0.65} Fe_{0.35}Cl₅Br _{0.5}I_{0.5} | 1.25× 10⁻³ | 5 | Li_{5.5}P_{0.96}Sb _{0.04}S_{4.40}O_{0.1 0}Cl_{1.5} | 6.12× 10⁻³ | 20 | 80wt%Li₁₀GeP₂S₁₂ +20wt%Li_{5.5}P_{0.96}Sb _{0.04}S_{4.40}O_{0.10}Cl_{1.5} | 8.82× 10⁻³ | 5 |
| Example 34 | Li_{2.35}Zr_{0.65} Fe_{0.35}Cl₅Br _{0.5}I_{0.5} | 1.16× 10⁻³ | 5 | Li_{5.5}P_{0.96}Sb _{0.04}S_{4.40}O_{0.1 0}Cl_{1.5} | 5.83× 10⁻³ | 20 | 80wt%Li₁₀GeP₂S₁₂ +20wt%Li_{5.5}P_{0.96}Sb _{0.04}S_{4.40}O_{0.10}Cl_{1.5} | 7.56× 10⁻³ | 5 |
| Example 35 | Li_{2.35}Zr_{0.65} Fe_{0.35}Cl₅Br _{0.5}I_{0.5} | 0.65× 10⁻³ | 5 | Li_{5.5}P_{0.96}Sb _{0.04}S_{4.40}O_{0.1 0}Cl_{1.5} | 4.32× 10⁻³ | 20 | 80wt%Li₁₀GeP₂S₁₂ +20wt%Li_{5.5}P_{0.96}Sb _{0.04}S_{4.40}O_{0.10}Cl_{1.5} | 8.46× 10⁻³ | 5 |
| Example 36 | Li_{2.35}Zr_{0.65} Fe_{0.35}Cl₅Br _{0.5}I_{0.5} | 0.76× 10⁻³ | 5 | Li_{5.5}P_{0.96}Sb _{0.04}S_{4.40}O_{0.1 0}Cl_{1.5} | 4.56× 10⁻³ | 20 | 80wt%Li₁₀GeP₂S₁₂ +20wt%Li_{5.5}P_{0.96}Sb _{0.04}S_{4.40}O_{0.10}Cl_{1.5} | 8.51× 10⁻³ | 5 |
| Example 37 | Li_{2.35}Zr_{0.65} Fe_{0.35}Cl₅Br _{0.5}I_{0.5} | 0.88× 10⁻³ | 5 | Li_{5.5}P_{0.96}Sb _{0.04}S_{4.40}O_{0.1 0}Cl_{1.5} | 4.85× 10⁻³ | 20 | 80wt%Li₁₀GeP₂S₁₂ +20wt%Li_{5.5}P_{0.96}Sb _{0.04}S_{4.40}O_{0.10}Cl_{1.5} | 8.57× 10⁻³ | 5 |
| Compara tive Example 1 | Li_{2.35}Zr_{0.65} Fe_{0.35}Cl₅Br _{0.5}I_{0.5} | 1.35× 10⁻³ | 5 | Li_{5.5}PS_{4.5}Cl _{1.5} | 9.12× 10⁻³ | 20 | 80wt%Li₁₀GeP₂S₁₂ +20wt%Li_{5.5}PS_{4.5}Cl _{1.5} | 11.42 ×10⁻³ | 5 |
| Compara tive Example 2 | Li_{2.35}Zr_{0.65} Fe_{0.35}Cl₅Br _{0.5}I_{0.5} | 1.35× 10⁻³ | 5 | | | | | | |
| Compara tive Example 3 | | | | Li_{5.5}P_{0.96}Sb _{0.04}S_{4.40}O_{0.1 0}Cl_{1.5} | 6.35× 10⁻³ | 20 | | | |
| Compara tive Example 4 | | | | | | | 80wt%Li₁₀GeP₂S₁₂ +20wt%Li_{5.5}P_{0.96}Sb _{0.04}S_{4.40}O_{0.10}Cl_{1.5} | 10.88 ×10⁻³ | 5 |

In the disclosure, performance tests are performed on the all-solid-state batteries prepared using different solid electrolyte membranes in Examples 1 to 37 and Comparative Examples 1 to 4.

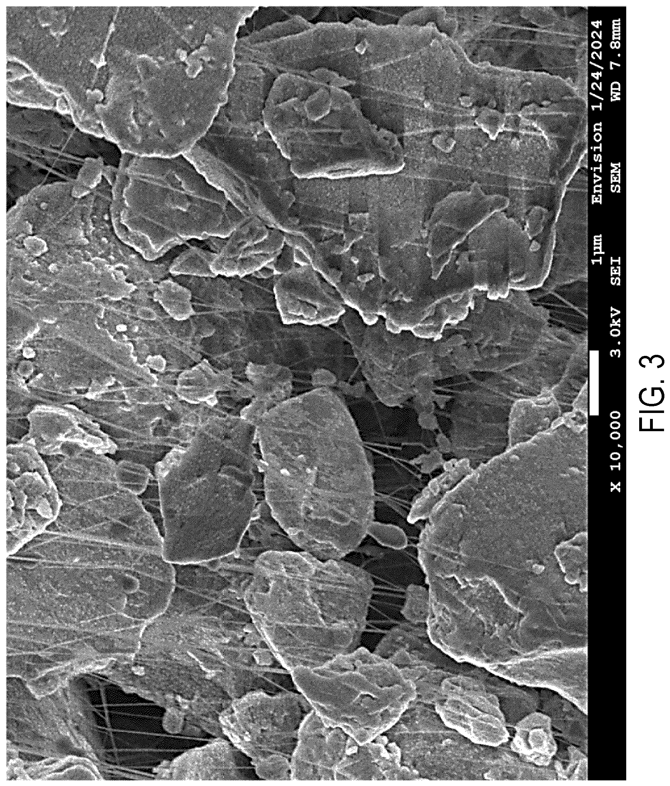

Referring to FIG. 3, in an embodiment of the disclosure, a morphology of the solid electrolyte membrane in Example 3 is characterized, for example, by a scanning electron microscope. A magnification of the scanning electron microscope is, for example, 10,000 times. According to FIG. 3, the first solid electrolyte layer and the second solid electrolyte layer prepared by the powder extrusion method have good self-supporting performance and may stably exist between the positive electrode and the negative electrode, thereby facilitating better performance of the solid electrolyte membrane.

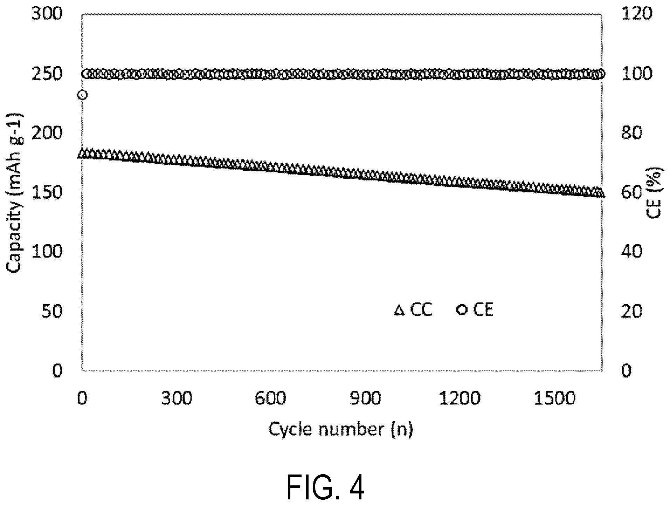

Referring to FIG. 4, in an embodiment of the disclosure, for example, a room temperature cycle performance test is performed on the all-solid-state battery in Example 3. Specifically, at 25 °C, charge-discharge cycling is performed on the all-solid-state battery at a charge/discharge rate of 1C/1C in a specified voltage range of 2.5V to 4.3V to obtain capacities (CC) and coulombic efficiency (CE) at different cycle numbers. According to FIG. 4, with an increase in the cycle numbers, an attenuation trend of the battery capacity is relatively gentle, and the coulombic efficiency of the battery does not fluctuate and stabilizes at around 100%, thereby indicating that the battery has good cycle performance.

Referring to Table 2, in an embodiment of the disclosure, for example, a room temperature cycle stability test is performed on the all-solid-state batteries in Examples 1 to 37 and Comparative Examples 1 to 4. Specifically, at 25 °C, the charge-discharge cycling is performed on the all-solid-state batteries at the charge/discharge rate of 1C/1C in the specified voltage range of 2.5V to 4.3V. The test is terminated when the battery capacity reaches 80% of a state of health (SOH) at the first cycle, and the room temperature cycle numbers of the battery are recorded.

**Table 2: test results of the all-solid-state batteries in Examples 1 to 37 and Comparative Examples 1 to 4**

| Group | Room temperature cycle numbers (80%SOH) |
|---|---|
| Example 1 | 1236 |
| Example 2 | 1548 |
| Example 3 | 1646 |
| Example 4 | 1424 |
| Example 5 | 1560 |
| Example 6 | 1593 |
| Example 7 | 1371 |
| Example 8 | 1446 |
| Example 9 | 1389 |
| Example 10 | 1086 |
| Example 11 | 1478 |
| Example 12 | 1413 |
| Example 13 | 428 |
| Example 14 | 1601 |
| Example 15 | 1562 |
| Example 16 | 1241 |
| Example 17 | 1289 |
| Example 18 | 1411 |
| Example 19 | 1181 |
| Example 20 | 1281 |
| Example 21 | 1199 |
| Example 22 | 1593 |
| Example 23 | 1316 |
| Example 24 | 1391 |
| Example 25 | 1227 |
| Example 26 | 1611 |
| Example 27 | 1287 |
| Example 28 | 1345 |
| Example 29 | 1175 |
| Example 30 | 1577 |
| Example 31 | 1242 |
| Example 32 | 1291 |
| Example 33 | 1547 |
| Example 34 | 1507 |
| Example 35 | 1412 |
| Example 36 | 1481 |
| Example 37 | 1504 |
| Comparative Example 1 | 85 |
| Comparative Example 2 | 13 (short circuit) |
| Comparative Example 3 | 451 |
| Comparative Example 4 | 12 |

Referring to Tables 1 and 2, comparing Example 3 and Comparative Examples 2 to 4, if the first solid electrolyte layer is used alone as the solid electrolyte membrane, the room temperature cycle number of the battery is 13, and the short circuit occurs; if the second solid electrolyte layer is used alone as the solid electrolyte membrane, the room temperature cycle number of the battery is 451; if the third solid electrolyte layer is used alone as the solid electrolyte membrane, the room temperature cycle number of the battery is only 12, and there is almost no cycle performance. However, if the first solid electrolyte layer, the third solid electrolyte layer, and the second solid electrolyte layer are sequentially formed as the solid electrolyte membrane, the room temperature cycle number of battery increases to 1646, which indicates that in the solid electrolyte membrane, the first solid electrolyte layer may widen the electrochemical window of the solid electrolyte membrane, so that the solid electrolyte membrane may be adapted to the high-voltage positive electrode and the lithium metal negative electrode, the second solid electrolyte layer may improve the electrochemical reduction stability of the solid electrolyte membrane, and the third solid electrolyte layer may consume the generated lithium dendrite, prevent the lithium dendrite penetration, avoid the short circuit of the all-solid-state battery, and ensure that the all-solid-state battery may still operate stably and safely at the high rate, thereby improving the cycle performance of the battery.

Referring to Tables 1 and 2, comparing Examples 1 to 4, as a proportion of the third electrolyte of Li₁₀GeP₂S₁₂ in the third solid electrolyte layer increases, the ionic conductivity of the third solid electrolyte layer gradually increases, and the room temperature cycle number of battery first increases gradually and then decreases gradually, that is, the cycle performance of the battery shows a trend of first increasing and then decreasing. Therefore, by controlling the content of the third electrolyte in the third solid electrolyte layer, the cycle performance of the battery may be improved.

Referring to Tables 1 and 2, comparing Examples 3, 5, and 6, among the three third electrolytes of Li₁₀GeP₂S₁₂, Li₁₀Ge_{0.5}Sn_{0.5}P₂S₁₂, and Li₁₀Ge_{0.5}Si_{0.5}P₂S₁₂, the battery assembled with Li₁₀GeP₂S₁₂ as the third electrolyte has the largest room temperature cycle number, which indicates that in the third electrolyte of Li₁₀Ge₁₋ᵢGᵢP₂S₁₂, when i is 0, the battery has the best cycle performance. Therefore, by controlling doping amounts of the Ge and G elements in the third electrolyte, the cycle performance of the battery may be improved.

Referring to Tables 1 and 2, by comparing Example 3 and Examples 7 to 9, as the thickness of the first solid electrolyte layer increases from 1 µm to 100 µm, the room temperature cycle number of battery first increases gradually and then decreases gradually, that is, the cycle performance of the battery shows the trend of first increasing and then decreasing. Referring to Tables 1 and 2, comparing Example 3 and Examples 10 to 12, as the thickness of the third solid electrolyte layer increases from 1 µm to 100 µm, the room temperature cycle number of battery first increases gradually and then decreases gradually, that is, the cycle performance of the battery shows the trend of first increasing and then decreasing. Referring to Tables 1 and 2, comparing Example 3 and Examples 13 to 15, as the thickness of the second solid electrolyte layer increases from 1 µm to 150 µm, the room temperature cycle number of battery first increases gradually and then decreases gradually, that is, the cycle performance of the battery shows the trend of first increasing and then decreasing. Therefore, by controlling the thicknesses of the first solid electrolyte layer, the second solid electrolyte layer, and the third solid electrolyte layer, the cycle performance of the battery may be improved.

Referring to Tables 1 and 2, comparing Examples 3, 16, and 17, as a doping amount of the Fe element in the first solid electrolyte layer increases, the ionic conductivity of the first solid electrolyte layer gradually decreases, and the room temperature cycle number of battery first increases gradually and then decreases gradually, that is, the cycle performance of the battery shows the trend of first increasing and then decreasing. Therefore, in the first solid electrolyte layer, by controlling a doping amount of the M element in the first electrolyte, the cycle performance of the battery may be improved.

Referring to Tables 1 and 2, comparing Examples 3, 18, and 19, as a doping amount of the Sb element in the second electrolyte increases, the ionic conductivities of the second solid electrolyte layer and the third solid electrolyte layer gradually decrease, and the room temperature cycle number of battery first increases gradually and then decreases gradually, that is, the cycle performance of the battery shows the trend of first increasing and then decreasing. Referring to Tables 1 and 2, comparing Examples 21 to 23, as a doping amount of the Bi element in the second electrolyte increases, the ionic conductivities of the second solid electrolyte layer and the third solid electrolyte layer gradually decrease, and the room temperature cycle number of battery first increases gradually and then decreases gradually, that is, the cycle performance of the battery shows the trend of first increasing and then decreasing. Referring to Tables 1 and 2, comparing Examples 25 to 27, as a doping amount of the In element in the second electrolyte increases, the ionic conductivities of the second solid electrolyte layer and the third solid electrolyte layer gradually decrease, and the room temperature cycle number of battery first increases gradually and then decreases gradually, that is, the cycle performance of the battery shows the trend of first increasing and then decreasing. Therefore, by controlling a doping amount of T element in the second electrolyte, the cycle performance of the battery may be improved.

Referring to Tables 1 and 2, comparing Examples 29 to 31, as a doping amount of the Mg element in the second electrolyte increases, the ionic conductivities of the second solid electrolyte layer and the third solid electrolyte layer gradually decrease, and the room temperature cycle number of battery first increases gradually and then decreases gradually, that is, the cycle performance of the battery shows the trend of first increasing and then decreasing. Therefore, by controlling a doping amount of E element in the second electrolyte, the cycle performance of the battery may be improved.

Referring to Tables 1 and 2, comparing Examples 3 and 20, Examples 22 and 24, Examples 26 and 28, and Examples 30 and 32, when the doping amounts of Sb, In, Bi, or Mg in the second electrolyte are the same, if Br and I elements are further doped into the second electrolyte, the ionic conductivities of the second solid electrolyte layer and the third solid electrolyte layer will decrease, and the room temperature cycle number of battery will decrease, that is, the cycle performance of the battery may be reduced. Therefore, by controlling the amount of element species included in X or Q in the second electrolyte, the cycle performance of the battery may be improved.

Referring to Tables 1 and 2, comparing Examples 3, 22, 26, and 30 and Comparative Example 1, when the second electrolyte is not doped with the Sb, Bi, In ,or Mg elements, the ionic conductivities of the second solid electrolyte layer and the third solid electrolyte layer will increase, but the room temperature cycle number of the battery is only 85, and there is almost no cycle performance, which indicates that the Sb, Bi, In, or Mg elements doped in the second electrolyte may significantly improve the cycle performance of the battery.

Referring to Tables 1 and 2, comparing Examples 3, 33, and 34, different first binders are used in the processes of preparing the first solid electrolyte layer, the second solid electrolyte layer, and the third solid electrolyte layer, which leads to different ionic conductivities of the first solid electrolyte layer, the second solid electrolyte layer, and the third solid electrolyte layer, and also leads to different cycle performance of the battery. Specifically, when PTFE is used as the first binder, the ionic conductivities of the first solid electrolyte layer, the second solid electrolyte layer, and the third solid electrolyte layer are the largest, and the room temperature cycle number of the battery is also the largest, that is, the cycle performance of the battery is the best.

Referring to Tables 1 and 2, comparing Example 3 and Examples 35 to 37, the methods of preparing the first solid electrolyte layer, the second solid electrolyte layer, and the third solid electrolyte layer are different, which leads to different ionic conductivities of the first solid electrolyte layer, the second solid electrolyte layer, and the third solid electrolyte layer, and also leads to different cycle performance of the battery. Specifically, compared to the wet coating method, the first solid electrolyte layer, the second solid electrolyte layer, and the third solid electrolyte layer prepared by the powder extrusion method have the largest ion conductivities, and the room temperature cycle number of the assembled battery is also the largest, that is, the cycle performance is the best.

The disclosure further provides an electronic device, includes at least one all-solid-state battery as described above. The all-solid-state battery is used to provide electrical energy. The electronic device may be a vehicle, a mobile phone, a portable device, a notebook computer, a ship, a spacecraft, an electric toy, and an electric tool, etc. In an embodiment of the disclosure, the vehicle is, for example, a new energy vehicle, and the new energy vehicle may be a battery electric vehicle, a hybrid electric vehicle, or an extended range vehicle. The spacecraft include airplanes, rockets, space shuttles and space ships, etc. The electric toy includes a fixed or mobile electric toy, such as a game console, an electric car toy, an electric ship toy, and an electric airplane toy, etc. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator and an electric planer. The electronic device includes the above all-solid-state battery, and therefore includes advantages of the above all-solid-state battery, which will not be further elaborated here.

Based on the above, the disclosure provides the all-solid-state battery and the application thereof. By sequentially forming the first solid electrolyte layer, the third solid electrolyte layer, and the second solid electrolyte layer, the multifunctional asymmetric self-supporting solid electrolyte membrane is prepared, which may improve the compatibility between the solid electrolyte membrane and the positive and negative electrodes, widen the electrochemical window of the solid electrolyte membrane, thereby improving the stability of the all-solid-state battery. It may improve the resistance of the solid electrolyte membrane to lithium dendrite penetration, avoid the short circuit of the battery, and ensure that the all-solid-state battery may still operate stably and safely at the high rate, thereby improving the safety and cycle life of the battery. It may improve the ionic conductivity of the solid electrolyte membrane, thereby improving the working efficiency of the battery. It may improve the electrochemical reduction stability of the solid electrolyte membrane, so that the solid electrolyte membrane may effectively resist issues such as reduction reaction and electrode interface instability.

## Claims

1. An all-solid-state battery (10), comprising at least:
a first solid electrolyte layer (131) disposed on a side of a positive electrode (11) of the all-solid-state battery (10), wherein an ionic conductivity of the first solid electrolyte layer (131) is 1×10⁻⁴S/cm~1×10⁻²S/cm;
a second solid electrolyte layer (132) disposed on a side of a negative electrode (12) of the all-solid-state battery (10), wherein an ionic conductivity of the second solid electrolyte layer (132) is 1×10⁻³S/cm~2×10⁻²S/cm; and
a third solid electrolyte layer (133) disposed between the first solid electrolyte layer (131) and the second solid electrolyte layer (132), wherein an ionic conductivity of the third solid electrolyte layer (133) is 1×10⁻³S/cm~2×10⁻²S/cm.

2. The all-solid-state battery (10) according to claim 1, wherein the first solid electrolyte layer (131) comprises a first electrolyte, and a chemical formula of the first electrolyte is Li₂₊ₙZr₁₋ₙMₙCl_{6-x-y}BrₓI_{y}, wherein 0≤n≤0.6, 0≤x≤6, 0≤y≤6, x+y≤6, and M is selected from at least one of V, Cr, Mn, Fe, Co, or Ni.

3. The all-solid-state battery (10) according to claim 2, wherein M is Fe, and a value range of n is 0.01≤n≤0.5.

4. The all-solid-state battery (10) according to claim 1, wherein the second solid electrolyte layer (132) comprises a second electrolyte, and a chemical formula of the second electrolyte is LiₐP_{1-b}T_{b}S_{c}O_{d}Xₑ, wherein 5<a<6, 0<b<1, 1.5<c<5, 0<d<2.5, 4<c+d<5, 1<e<2, T is selected from at least one of Al, Ga, In, Ti, Sc, As, Sb, Bi, V, or Nb, and X is selected from at least one of Cl, Br, or I.

5. The all-solid-state battery (10) according to claim 4, wherein T is selected from at least one of Sb, In, or Bi, X is Cl, and a value range of b is 0<b≤0.1.

6. The all-solid-state battery (10) according to claim 1, wherein the second solid electrolyte layer (132) comprises a second electrolyte, and a chemical formula of the second electrolyte is Li_{f}P_{1-g}E_{g}S_{w}O_{g}Q_{z}, wherein 5<f<10, 0<g<1, 3<w<6, 4<w+g<6, 0<z<2, E is selected from at least one of Mg, Ca, Sr, Ba, Zn, Cr, Sn, or Pb, and Q is selected from at least one of Cl, Br, or I.

7. The all-solid-state battery (10) according to claim 6, wherein E is Mg, Q is Cl, and a value range of g is 0.01≤g≤0.1.

8. The all-solid-state battery (10) according to any one of claims 4 to 7, wherein the third solid electrolyte layer (133) comprises the second electrolyte and a third electrolyte, and a chemical formula of the third electrolyte is Li₁₀Ge₁₋ᵢGᵢP₂S₁₂, wherein, 0≤i < 1, and G is selected from at least one of Si or Sn.

9. The all-solid-state battery (10) according to claim 8, wherein in the third solid electrolyte layer (133), a content of the second electrolyte is 1 wt% to 95 wt%, and a content of the third electrolyte is 5 wt% to 99 wt%.

10. The all-solid-state battery (10) according to claim 1, wherein a thickness of the first solid electrolyte layer (131) is 1 µm to 100 µm, a thickness of the second solid electrolyte layer (132) is 1 µm to 150 µm, and a thickness of the third solid electrolyte layer (133) is 1 µm to 100 µm.

11. An electronic device, comprising the all-solid-state battery (10) according to any one of claims 1 to 10.
